# EUROPÄISCHE PATENTANMELDUNG

(11) **EP 1 382 289 A1**
(43) Veröffentlichungstag der Anmeldung: **21.01.2004**
(21) Anmeldenummer: 03015998.2
(22) Anmeldetag: 14.07.2003
(51) Int. Cl.: A47L 15/42, D06F 39/04, A62C 37/00

(54) **Sicherheitseinrichtung für eine Vorrichtung mit einem Heizelement**

(30) Priorität: 16.07.2002 DE 10232182
(71) Anmelder: BSH Bosch und Siemens Hausgeräte GmbH, 81669 München (DE)
(72) Erfinder: Fränzel, Bernd, Dr., 83301 Traunreut (DE)

(57) **Zusammenfassung**

Die Erfindung betrifft eine Sicherheitseinrichtung zum Schutz einer Vorrichtung, die ein Heizelement (4) zum Aufheizen eines Mediums (2) aufweist, vor unzulässigen Temperaturzuständen. Die Sicherheitseinrichtung verfügt über ein Sensorelement (5, 8) zur Temperaturerfassung, das so in der Vorrichtung angeordnet ist, dass es beim ordnungsgemäßen Betrieb der Vorrichtung mit dem Medium (2) thermisch gekoppelt ist. Weiterhin ist ein Sensorheizelement (6, 9) vorgesehen zum Aufheizen des Sensorelements (5, 8) auf Temperaturen, die bei einer Unterbrechung der thermischen Kopplung zwischen dem Sensorelement (5, 8) und dem Medium (2) oberhalb einer Temperatur liegen, die das Medium (2) beim ordnungsgemäßen Betrieb der Vorrichtung maximal annimmt.

## Beschreibung

Die Erfindung betrifft eine Sicherheitseinrichtung zum Schutz einer Vorrichtung, die ein Heizelement zum Aufheizen eines Mediums aufweist, vor unzulässigen Temperaturzuständen.

Derartige Sicherheitseinrichtungen sind bereits in verschiedenartigen Ausgestaltungen bekannt. Sie dienen dazu, Aufheizvorrichtungen vor irreversiblen Schädigungen zu schützen und Gefahrenzustände, insbesondere Stromschlag- und Brandgefahren zu verhindern. Bekannte Sicherheitseinrichtungen sind häufig so ausgebildet, dass sie über einen Temperatursensor verfügen, der thermisch mit dem Heizelement der Aufheizvorrichtung gekoppelt ist. Der Wärmeübergang vom Heizelement zum Temperatursensor kann durch Wärmeleitung, durch Wärmestrahlung und/oder durch Konvektion erfolgen. Wenn die vom Temperatursensor erfasste Temperatur einen vorgegebenen Schwellwert überschreitet, wird eine Funktionsstörung angenommen und eine Abschaltung des Heizelements veranlasst. Eine derart ausgebildete Sicherheitseinrichtung kann bei vielerlei Anwendungen eingesetzt werden und liefert meist zufriedenstellende Ergebnisse. Allerdings kommt es durch die für den Wärmeübergang vom Heizelement zum Temperatursensor benötigte Zeit zu einer Zeitverzögerung bei der Temperaturerfassung, d. h. bei einer Temperaturänderung hinkt die Temperatur des Temperatursensors hinterher. Dadurch kann es vorkommen, dass trotz einer unmittelbar nach dem Erfassen einer unzulässig hohen Temperatur veranlassten Abschaltung des Heizelements ein Überhitzen der Aufheizvorrichtung nicht mehr verhindert werden kann. Insbesondere bei einem Trockenlauf, d. h. bei einem Verlust des aufzuheizenden Mediums kann es infolge der hohen Wärmekapazität und der thermischen Trägheit des Heizelements sowie der thermischen Trägheit des Temperatursensors zu örtlichen Überhitzungen kommen, ohne dass der Temperatursensor diese rechtzeitig an seinem Anbringungsort registriert. Besonders gefährdet sind dabei Heizelemente, die einer Übertemperatur nicht lange Stand halten können, wie beispielsweise Dickschichtheizelemente. Durch konstruktive Maßnahmen oder durch geeignete Steuerungsmaßnahmen kann die Überhitzungsgefahr zwar gemindert werden. Allerdings erhöht sich dadurch der Aufwand oder die sonstigen Steuerfunktionen der Aufheizvorrichtung werden durch die zusätzlichen Steuermaßnahmen verlangsamt.

Der Erfindung liegt die Aufgabe zugrunde, eine Vorrichtung zum Aufheizen eines Mediums vor unzulässigen Temperaturzuständen zu schützen.

Diese Aufgabe wird durch eine Sicherheitseinrichtung gemäß Anspruch 1 und durch ein Verfahren gemäß Anspruch 12 gelöst.

Die erfindungsgemäße Sicherheitseinrichtung zum Schutz einer Vorrichtung, die ein Heizelement z um Aufheizen e ines M ediums a ufweist, verfügt ü ber e in S ensorelement zur Temperaturerfassung, das so in der Vorrichtung angeordnet ist, dass es beim ordnungsgemäßen Betrieb der Vorrichtung mit dem Medium thermisch gekoppelt ist. Weiterhin ist ein Sensorheizelement vorgesehen zum Aufheizen des Sensorelements auf Temperaturen, die bei einer Unterbrechung der thermischen Kopplung zwischen dem Sensorelement und dem Medium oberhalb einer Temperatur liegen, die das Medium beim ordnungsgemäßen Betrieb der Vorrichtung maximal annimmt. Dieser Aufbau der Sicherheitseinrichtung hat den Vorteil, dass ein unzulässiger Temperaturzustand sehr schnell erkannt wird, so dass rechtzeitig Gegenmaßnahmen eingeleitet werden können. Durch das Sensorheizelement kann das Sensorelement extrem schnell aufgeheizt werden, so dass es eine sehr kurze Ansprechzeit aufweist. Etwaige durch einen Wärmetransport entstehende Verzögerungszeiten werden weitgehend eliminiert, da das Sensorelement direkt durch das Sensorheizelement beheizt wird. Durch das schnelle Ansprechen der erfindungsgemäßen Sicherheitseinrichtung können Temperaturüberschwinger sehr gering gehalten werden, so dass es möglich ist, in der Vorrichtung, die durch die Sicherheitseinrichtung geschützt wird, Baugruppen einzusetzen, die sehr empfindlich auf Überhitzung reagieren.

Im bevorzugten Ausführungsbeispiel bilden das Sensorelement und das Sensorheizelement eine konstruktive Einheit. Dadurch verringern sich zum einen der Aufwand und der benötigte Bauraum. Zum anderen lässt sich eine sehr gute thermische Kopplung zwischen dem Sensorheizelement und dem Sensorelement erreichen.

Insbesondere können das Heizelement und/oder das Sensorheizelement und/oder das Sensorelement in Dickschichttechnik gefertigt sein. Dabei können das Heizelement, das Sensorheizelement und das Sensorelement als gemeinsame Dickschichtbaugruppe ausgebildet sein. Die Dickschichttechnik ermöglicht eine sehr kompakte Bauform, die infolge ihrer geringen Wärmekapazität und geringen thermischen Trägheit einen effizienten Betrieb zulässt.

Weiterhin kann das Sensorelement als Bimetallelement ausgebildet sein. Dabei kann das Bimetallelement zur Übernahme der Funktion des Sensorheizelements durchgehend aus einem Widerstandsmaterial bestehen. Ebenso kann das Bimetallelement zur Übernahme der Funktion des Sensorheizelements eine auf einer Isolierschicht angeordnete Widerstandsschicht aufweisen. Dies hat den Vorteil, dass die weit verbreitete und bewährte Bimetalltechnik bei der erfindungsgemäßen Sicherheitseinrichtung eingesetzt werden kann.

Die erfindungsgemäße Sicherheitseinrichtung kann mehrere Sensorelemente und mehrere Sensorheizelemente aufweisen. Dadurch kann eine noch höhere Zuverlässigkeit auch in extremen Betriebssituationen erzielt werden, beispielsweise wenn infolge einer Schiefstellung der Vorrichtung, in der sich nur eine geringe Menge des aufzuheizenden Mediums befindet, das Heizelement partiell nicht mehr in unmittelbarem thermischen Kontakt mit dem Medium steht und somit eine Überhitzungsgefahr besteht, ein einzelnes Sensorelement aber nach wie vor in unmittelbarem thermischen Kontakt mit dem Medium stehen könnte und die Überhitzungsgefahr somit möglicherweise nicht erkannt würde.

Je nach Anwendung kann das Sensorheizelement so an eine externe Stromversorgung angeschlossen sein, dass die Sicherheitseinrichtung auch bei ausgeschaltetem Heizelement betriebsbereit ist. Dadurch kann eine Aktivierung des Heizelements ohne aufzuheizendes Medium von vorneherein verhindert werden, so dass eventuellen Schäden vorgebeugt wird. Eine versuchsweise Inbetriebnahme des Heizelements zur Erkennung des Medienverlusts inklusive des damit verbundenen Überhitzungsrisikos kann vermieden werden.

Bei der Vorrichtung, bei der die erfindungsgemäße Sicherheitseinrichtung eingesetzt wird, können konstruktive Maßnahmen vorgesehen sein zur Reduzierung der thermischen Kopplung zwischen dem Sensorelement und dem Heizelement, die nicht über das Medium erfolgt. Dies hat den Vorteil, dass Störeinflüsse unterdrückt werden und somit ein sehr präzises Ansprechen der Sicherheitseinrichtung möglich ist.

Beim erfindungsgemäßen Verfahren zum Schutz einer Vorrichtung, die ein Heizelement zum Aufheizen eines Mediums aufweist, vor unzulässigen Temperaturzuständen, wird von einem Sensorelement eine Temperatur erfasst und abhängig von der erfassten Temperatur wird ermittelt, ob ein unzulässiger Temperaturzustand der Vorrichtung vorliegt. Das Sensorelement wird mit Hilfe eines Sensorheizelements beheizt und beim ordnungsgemäßen Betrieb der Vorrichtung mit Hilfe des Mediums gekühlt. Bei einem unzulässigem Temperaturzustand kann veranlasst werden, dass das Heizelement ausgeschaltet wird.

Die Erfindung wird nachstehend an Hand der in der Zeichnung dargestellten Ausführungsbeispiele erläutert.

Es zeigen
Figur 1 eine schematische Darstellung eines Ausführungsbeispiels einer Aufheizvorrichtung mit der erfindungsgemäßen Sicherheitseinrichtung,
Figur 2 ein Blockschaltbild für eine mögliche Verdrahtung der erfindungsgemäßen Sicherheitseinrichtung,
Figur 3 je ein Diagramm für den zeitlichen Verlauf der Temperaturen der Aufheizvorrichtung und des Temperatursensors im Normalbetrieb, wobei das Sensorheizelement über einen Netzschalter an die Stromversorgung angeschlossen ist,
Figur 4 Diagramme analog zu Figur 3 für den Fall des Betriebs ohne Medium,
Figur 5 Diagramme analog zu Figur 3, wobei das Sensorheizelement direkt an die Stromversorgung angeschlossen ist,
Figur 6 Diagramme analog zu Figur 5 für den Fall des Betriebs ohne Medium,
Figur 7 ein Ausführungsbeispiel eines Wasserkochers, bei dem das Heizelement in Dickschichttechnik ausgeführt ist, in einer Schnittdarstellung,
Figur 8 das Bimetallelement aus Figur 7 und das darunter liegende Sensorheizelement in Aufsicht,
Figur 9 ein weiteres Ausführungsbeispiel für das Bimetallelement und das Sensorheizelement in Aufsicht,
Figur 10 ein Ausführungsbeispiel der erfindungsgemäßen Sicherheitseinrichtung ohne thermomechanische Elemente in Schnittdarstellung,
Figur 11 ein Ausführungsbeispiel eines Wasserkochers mit einem Heizelement und einem Sensorheizelement in konventioneller Technik in Schnittdarstellung,
Figur 12 eine Schaltungsvariante, bei der das Sensorheizelement über den Netzschalter an die Stromversorgung angeschlossen ist,
Figur 13 eine Schaltungsvariante, bei der das Sensorheizelement direkt an die Stromversorgung angeschlossen ist,
Figur 14 eine Schaltungsvariante mit einer Steuer- oder Regelelektronik und
Figur 15 eine vollelektronische Schaltungsvariante.

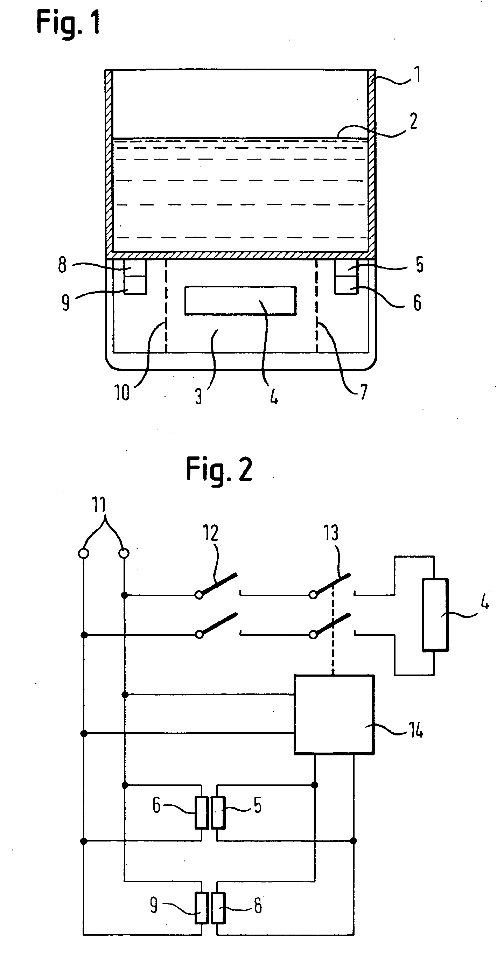

Figur 1 zeigt eine schematische Darstellung eines Ausführungsbeispiels für eine Aufheizvorrichtung, die mittels der erfindungsgemäßen Sicherheitseinrichtung vor Überhitzung geschützt werden soll. Für die Darstellung wurde ein Wasserkocher gewählt, der allerdings stark schematisiert gezeichnet ist. Die erfindungsgemäße Sicherheitseinrichtung ist aber für nahezu beliebige Aufheizvorrichtungen geeignet, wie beispielsweise Boiler, Durchlauferhitzer, Heißgetränkebereiter wie Kaffee- und Teemaschinen, Fertigsuppenbereiter, Waschmaschinen, Spülmaschinen, Eierkocher, Friteusen, Haartrockner, Raumlufterhitzer, Wäschetrockner usw.

Der Wasserkocher weist einen Behälter 1 auf, der zum Teil mit dem aufzuheizenden Medium 2, nämlich Wasser, gefüllt ist. Am Boden des Behälters 1 ist eine Heizplatte 3 angeordnet, die ein Heizelement 4 aufweist. Um eine schnelle und möglichst gleichmäßige Wärmeverteilung zu gewährleisten, ist die Heizplatte 3 im bevorzugten Ausführungsbeispiel als massiver Aluminiumblock ausgebildet, in den das Heizelement 4, beispielsweise ein wendelförmig aufgewickelter Widerstandsdraht, eingebettet ist. Die Heizplatte 3 und das Heizelement 4 können auch einen anderen Aufbau als den hier beschriebenen aufweisen, beispielsweise unter Anwendung der Dickschichttechnik. Ebenso können die Heizplatte 3 und das Heizelement 4 durch eine andersartig konzipierte Heizeinrichtung ersetzt sein. In die Heizplatte 3 ist ein Temperatursensor 5 eingelassen der mit einem Sensorheizelement 6 zum direkten Beheizen des Temperatursensors 5 zu einer konstruktiven Einheit zusammengefasst ist. Der Temperatursensor 5 ist in unmittelbarer Nähe zu dem vom Behälter 1 aufgenommenen Medium 2 angeordnet, so dass ein guter thermischer Kontakt zwischen dem Medium 2 und dem Temperatursensor 5 gewährleistet ist. Weiterhin ist für eine optimale Funktion von Bedeutung, dass zum einen ein sehr guter thermischer Kontakt zwischen dem Sensorheizelement 6 und dem Temperatursensor 5 besteht und zum anderen beide über eine sehr geringe thermische Masse verfügen. Dadurch kann ein sehr schnelles und zuverlässiges Ansprechen der Sicherheitseinrichtung gewährleistet werden.

Zwischen dem Temperatursensor 5 und dem Heizelement 4 ist eine gestrichelte Linie 7 eingezeichnet. Dadurch soll angedeutet werden, dass der thermische Kontakt zwischen dem Heizelement 4 und dem Temperatursensor 5 durch gezielte konstruktive Maßnahmen verschlechtert wird. Bei diesen Maßnahmen kann es sich beispielsweise um in den Aluminiumblock der Heizplatte 3 eingearbeitete Schlitze handeln, durch die der Wärmetransport vom Heizelement 4 zum Temperatursensor 5 deutlich reduziert wird. Zusätzlich zum Temperatursensor 5 ist bei dem dargestellten Ausführungsbeispiel ein weiterer Temperatursensor 8 vorhanden. Ebenso ist auch ein weiteres Sensorheizelement 9 vorhanden und es sind durch die weitere gestrichelte Linie 10 angedeutete Maßnahmen zur Reduzierung des Wärmetransports vom Heizelement 4 zum weiteren Temperatursensor 8 getroffen. Der weitere Temperatursensor 8 und das weitere Sensorheizelement 9 sind optional, d. h. die Funktionsfähigkeit der Sicherheitseinrichtung ist bereits durch einen Temperatursensor 5 und ein Sensorheizelement 6 gewährleistet. Durch den weiteren Temperatursensor 8 und das weitere Sensorheizelement 9 lässt sich allerdings die Zuverlässigkeit der Sicherheitseinrichtung insbesondere unter extremen Betriebsbedingungen steigern.

Figur 2 zeigt ein Blockschaltbild für eine mögliche Verdrahtung der Sicherheitseinrichtung. Der Wasserkocher oder eine sonstige Aufheizvorrichtung, die durch die Sicherheitseinrichtung vor Überhitzung geschützt werden soll, wird über externe Anschlussklemmen 11, an die beispielsweise ein Netzstecker oder auch unmittelbar ein Stromnetz angeschlossen sein kann, mit Strom versorgt. Von den externen Anschlussklemmen 11 führen Leitungen zu einem Netzschalter 12, mit dem die Aufheizvorrichtung ein- und ausgeschaltet werden kann. Der Netzschalter 12 ist wiederum mit einem Übertemperaturschalter 13 verbunden und dieser schließlich mit dem Heizelement 4, so dass das Heizelement 4 nur dann mit Strom versorgt wird, wenn sowohl der Netzschalter 12 als auch der Übertemperaturschalter 13 geschlossen ist. Zwischen den externen Anschlussklemmen 11 und dem Netzschalter 12 zweigen Leitungen zu einem Steuergerät 14 ab und versorgen es mit Strom. Weitere Leitungen zweigen zu den Sensorheizelementen 6 und 9 ab. In dem in Figur 2 dargestellten Ausführungsbeispiel sind somit das Steuergerät 14 und die Sensorheizelemente 6 und 9 unabhängig von der Stellung des Netzschalters 12 fortwährend betriebsbereit. Falls ein permanenter Betrieb der Sicherheitseinrichtung unabhängig vom Betriebszustand der Aufheizvorrichtung nicht gewünscht wird, kann die Sicherheitseinrichtung über den Netzschalter 12 mit Strom versorgt werden, d. h. die Sensorheizelemente 6 und 9 und das Steuergerät 14 sind zwischen dem Netzschalter 12 und dem Übertemperaturschalter 13 angeklemmt. Die Temperatursensoren 5 und 8 sind zueinander parallel geschaltet und mit dem Steuergerät 14 eingangsseitig verbunden, das den Schaltzustand des Übertemperaturschalters 13 abhängig von den Signalen der Temperatursensoren 5 und 8 beeinflusst.

Bei der Darstellung gemäß Figur 2 handelt es sich um ein rein schematisches Blockschaltbild. Bei der tatsächlichen Realisierung sind die einzelnen Funktionsblöcke zwar im Prinzip vorhanden, aber, wie im folgenden noch näher erläutert wird, keineswegs notwendigerweise 1 zu 1 realisiert.

Die Funktionsweise der erfindungsgemäßen Sicherheitseinrichtung beruht auf folgendem Prinzip, das der Einfachheit halber unter Berücksichtigung nur eines einzigen Temperatursensors 5 und eines einzigen Sensorheizelements 6 beschrieben wird:

Das Sensorheizelement 6 heizt den Temperatursensor 5 auf. Gleichzeitig kühlt das Medium 2 im Behälter 1 den Temperatursensor 5, so dass sich im Bereich des Temperatursensors 5 bei konstanter Heizleistung des Sensorheizelements 6 eine von der Temperatur des Mediums 2 abhängige Gleichgewichtstemperatur einstellt. Bei einem guten thermischen Kontakt des Temperatursensors 5 zum Medium 2 entspricht die Gleichgewichtstemperatur jeweils ungefähr der Temperatur des Mediums 2. Der Temperatursensor 5 ist so ausgelegt, dass die Gleichgewichtstemperatur, die sich bei der im Normalbetrieb maximal auftretenden Temperatur des Mediums 2 einstellt, unterhalb der Ansprechtemperatur des Temperatursensors 5 liegt, ab der eine Überhitzung angenommen wird. Im Normalbetrieb ist der Übertemperaturschalter 13 somit geschlossen und dadurch das Heizelement 4 mit dem Netzschalter 12 verbunden. Wenn das Heizelement 4 durch Schließen des Netzschalters 12 in Betrieb genommen wird, verteilt sich die vom Heizelement 4 erzeugte Wärme über die Heizplatte 3, in die das Heizelement 4 eingebettet ist und wird an das Medium 2 im Behälter 1 abgegeben, so dass das Medium 2 aufgeheizt wird. Kommt es dabei zu einem Verlust des Mediums 2, beispielsweise infolge eines fortgesetzten Verdampfungsprozesses, so entfällt die Kühlwirkung des Mediums 2 auf den Temperatursensor 5, so dass dessen Temperatur bis über die Ansprechtemperatur ansteigt und eine Überhitzung erkannt wird. Als Gegenmaßnahme veranlasst das Steuergerät 14 ein Öffnen des Übertemperaturschalters 13, so dass die Stromzufuhr zum Heizelement 4 unterbrochen wird. Je nach Ausbildung der Aufheizvorrichtung, in der die Sicherheitseinrichtung eingesetzt wird spricht der Temperatursensor 5 nicht nur bei einem Verlust des Mediums 2, sondern auch bei einer unzulässig hohen Medientemperatur an. Dies kann zum Beispiel bei der Anwendung in einer Friteuse der Fall sein, bei der ein Maximalwert für die Fetttemperatur nicht überschritten werden darf.

Bei dem in Figur 2 dargestellten Verdrahtungsbeispiel der Sicherheitseinrichtung ist das Sensorheizelement 6 permanent mit dem Stromnetz verbunden, d. h. der Temperatursensor 5 wird permanent beheizt. Um den Stromverbrauch möglichst gering zu halten, weist das Sensorheizelement 6 nur eine sehr geringe Leistungsaufnahme auf.

Solange sich kein Medium 2 im Behälter 1 befindet, liegt die Temperatur des Temperatursensors 5 oberhalb der Ansprechtemperatur, so dass der Übertemperaturschalter 13 geöffnet ist und eine Inbetriebnahme des Heizelements 4 folglich nicht möglich ist, d. h. es stellt sich ein thermischer Selbsthalteeffekt ein. Dieses Ausführungsbeispiel bietet einen optimalen Schutz vor Schäden, die durch Inbetriebnahme der Aufheizvorrichtung ohne darin enthaltenes Medium 2 auftreten können, da in diesem Fall ein Aktivieren des Heizelements 4 vollständig verhindert wird, d. h. es kommt noch nicht einmal zu einer kurzzeitigen Aktivierung des Heizelements 4. Aber auch für den Fall, dass ein permanenter Betrieb des Sensorheizelements 6 nicht erwünscht ist und eine entsprechend andere Verdrahtung gewählt wird, bietet die Sicherheitseinrichtung noch einen sehr guten Schutz, da der Temperatursensor 5 mit dem Sensorheizelement 6 bei Abwesenheit des Mediums 2 sehr schnell auf seine Ansprechtemperatur aufgeheizt wird und dementsprechend ein Öffnen des Übertemperaturschalters 13 veranlasst wird.

Ein Problem bei der Erkennung einer Übertemperatur kann dann auftreten, wenn der Behälter 1 nur partiell mit dem Medium 2 gefüllt ist und zu dem schief gehalten wird. Dies kann zur Folge haben, dass die Heizplatte 3 gebietsweise nicht mit dem Medium 2 bedeckt ist und sich deshalb stark aufheizt. Wenn die Schiefstellung so erfolgt, dass sich dort, wo der Temperatursensor 5 angeordnet ist, noch ein Rest des Mediums 2 befindet, wird der Temperatursensor 5 weiterhin durch das Medium 2 gekühlt und erreicht möglicherweise nicht seine Anspruchstemperatur, d. h. die sich anbahnende Überhitzung wird nicht oder nicht rechtzeitig erkannt. Um dies zu verhindern, ist der weitere oder sind ggf. mehrere weitere Temperatursensoren 8 und dazugehörige Sensorheizelemente 9 vorgesehen, wobei die einzelnen Temperatursensoren 5 und 8 jeweils möglichst weit voneinander entfernt angeordnet sind. Damit bestehen gute Chancen, dass auch bei einer Schiefstellung des Behälters 1 wenigstens einer der Temperatursensoren 5 oder 8 trocken liegt und dementsprechend infolge der Beheizung mit dem Sensorheizelement 6 bzw. 9 seine Ansprechtemperatur überschreitet.

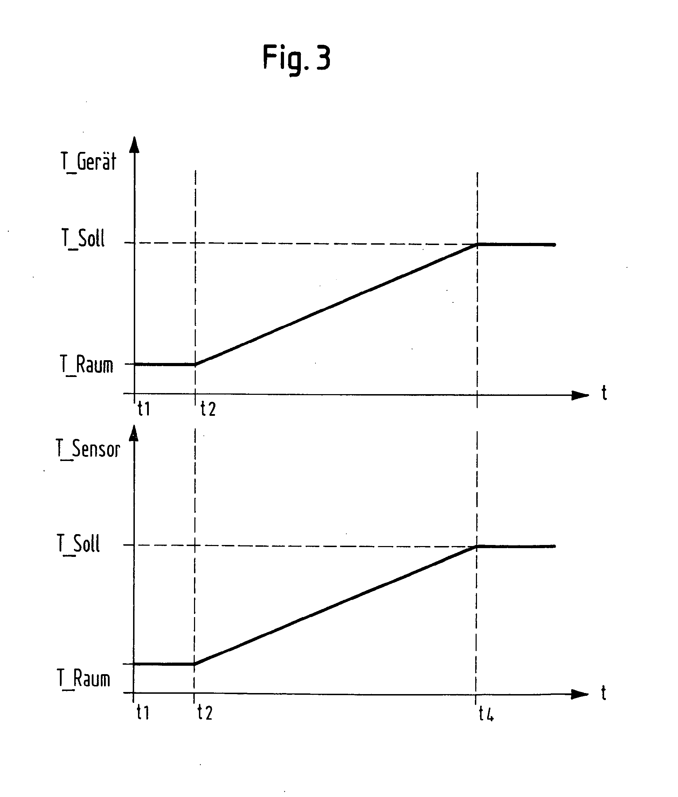

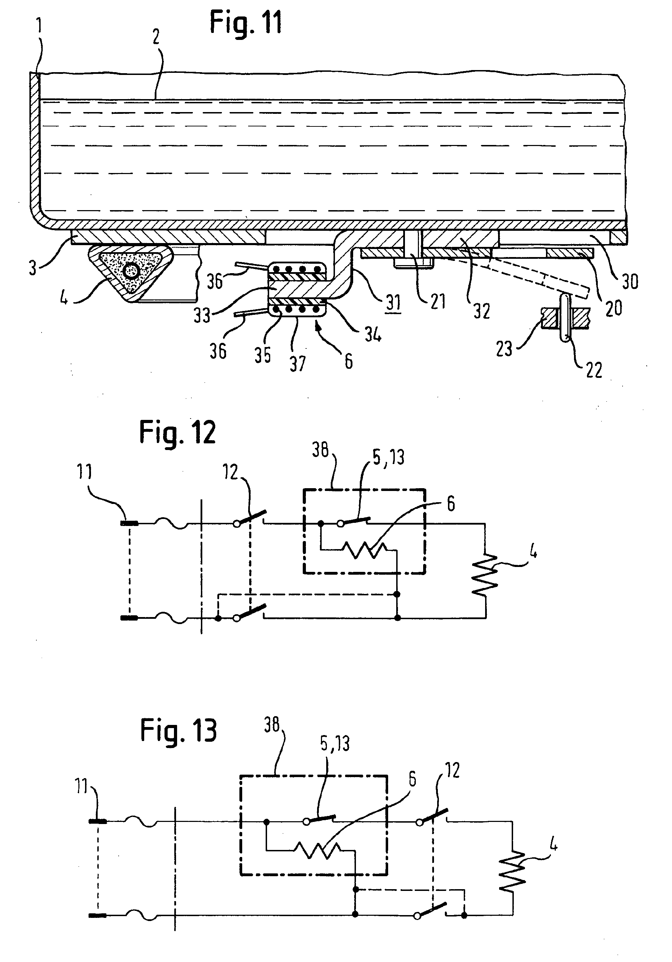

Figur 3 zeigt je ein Diagramm für den zeitlichen Verlauf der Temperatur der Aufheizvorrichtung (oben) und der Temperatur des Temperatursensors 5 (unten). Im oberen Diagramm ist auf der Ordinate die T emperatur T_Gerät der A ufheizvorrichtung aufgetragen. Im unteren Diagramm ist auf der Ordinate die Temperatur T_Sensor des Temperatursensors 5 aufgetragen. Auf der Abszisse ist jeweils die Zeit t aufgetragen. Die dargestellten Diagramme beziehen sich auf ein Ausführungsbeispiel, bei dem die Stromversorgung des Sensorheizelements 6 durch den Netzschalter 12 unterbrochen werden kann, beispielsweise gemäß der in Figur 12 dargestellten Schaltungsvariante. Weiterhin beziehen sich die Diagramme auf einen Normalbetrieb der Aufheizvorrichtung, d. h. die Aufheizvorrichtung weist eine ausreichende Menge des aufzuheizenden Mediums 2 auf und es liegt keine Situation vor, die eine Überhitzung zur Folge hat.

Zur Zeit t=t1 wird die Betriebsspannung bei geöffnetem Netzschalter 12 an die Aufheizvorrichtung angelegt, d. h. es wird der Netzstecker der Aufheizvorrichtung in eine Steckdose eingesteckt. Da bei geöffnetem Netzschalter 12 weder das Sensorheizelement 6 noch das Heizelement 4 mit Strom versorgt werden, bleiben die Temperaturen T_Gerät der Aufheizvorrichtung und T_Sensor des Temperatursensors 5 unverändert auf dem Niveau der Raumtemperatur T_Raum. Zur Zeit t=t2 wird die Aufheizvorrichtung in Betrieb genommen, d. h. durch Schließen des Netzschalters 12 wird das Heizelement 4 mit Strom versorgt. Gleichzeitig wird auch das Sensorheizelement 6 mit Strom versorgt. Trotz der Beheizung mit dem Sensorheizelement 6 steigt die Temperatur des Temperatursensors 5 nur sehr langsam an, da der Temperatursensor 5 durch das aufzuheizende Medium 2 fortwährend gekühlt wird. Der gute thermische Kontakt zum Medium 2 hat zur Folge, dass die Temperatur T_Sensor des Temperatursensors 5 nur geringfügig über der Temperatur des Mediums 2 liegt und entsprechend der Temperatur des Mediums 2 ansteigt, d. h. die Temperaturverläufe im oberen und unteren Diagramm sind praktisch identisch. Zur Zeit t=t4 ist die Solltemperatur T_Soll des Mediums 2 erreicht. Ab diesem Zeitpunkt bleibt die Temperatur des Mediums 2 konstant, da beispielsweise dessen Siedepunkt erreicht ist und/oder die Stromzufuhr zum Heizelement 4 unterbrochen wird. Dies hat zur Folge dass auch die Temperaturen T_Gerät der Aufheizvorrichtung und T_Sensor des Temperatursensors 5 ungefähr bei der Temperatur T_Soll verharren. Im dargestellten Zeitintervall kommt es somit nicht zu einem Ansprechen der erfindungsgemäßen Sicherheitseinrichtung.

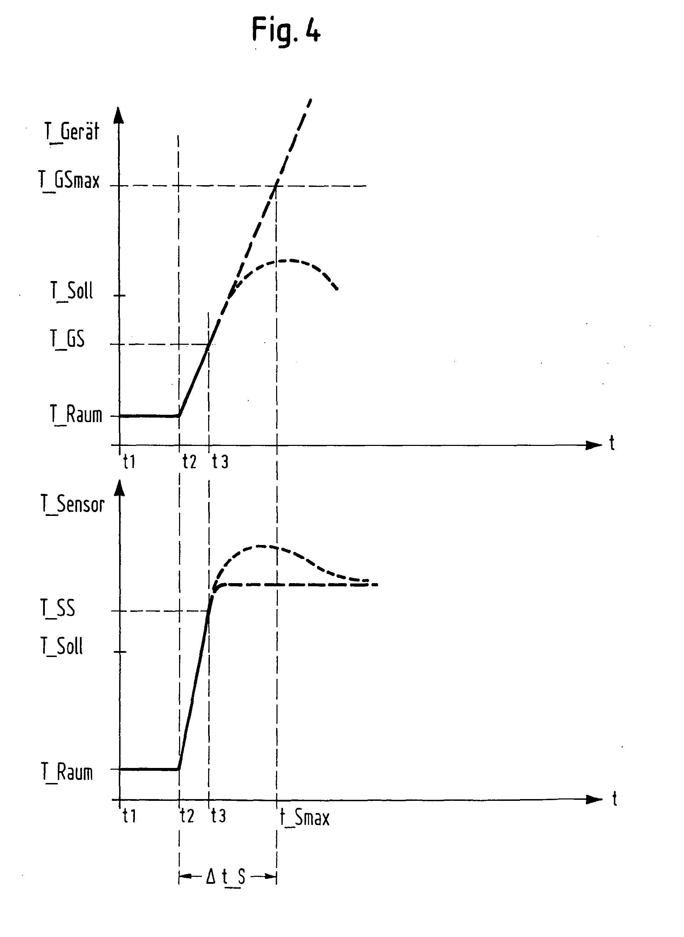

Figur 4 zeigt je ein weiteres Diagramm für den zeitlichen Verlauf der Temperaturen T_Gerät der Aufheizvorrichtung und T_Sensor des Temperatursensors 5. Die Art der Darstellung und das zugrund liegende Ausführungsbeispiel wurden in Übereinstimmung mit Figur 3 gewählt. Allerdings sind die Temperaturverläufe im Gegensatz zu Figur 3 für den F all dargestellt, dass die Aufheizvorrichtung ohne eingefülltes Medium 2 betrieben wird, so dass es zu einer Überhitzung kommt, falls keine Gegenmaßnahmen getroffen werden.

Zur Zeit t=t1 wird wiederum der Netzstecker eingesteckt, wobei die Temperaturen T_Gerät der Aufheizvorrichtung und T_Sensor des Temperatursensors 5 unverändert bei der Raumtemperatur T_Raum verharren. Zur Zeit t=t2 wird der Netzschalter 12 geschlossen und damit die Aufheizvorrichtung in Betrieb genommen, d. h. sowohl d as Heizelement 4 a Is auch das Sensorheizelement 6 werden mit Strom versorgt. Da kein kühlendes Medium 2 vorhanden ist, heizt das Sensorheizelement 6 den Temperatursensor 5 infolge der geringen thermischen Trägheit des Sensorheizelements 6 und des Temperatursensors 5 sehr schnell auf. Ebenso heizt das Heizelement 4 die Aufheizvorrichtung relativ schnell auf, wobei der Temperaturanstieg allerdings geringer ausfällt als beim Temperatursensor 5. Zur Zeit t=t3 überschreitet die Temperatur T_Sensor des Temperatursensors 5 eine Ansprechtemperatur T_SS, die oberhalb der im Normalbetrieb maximal auftretenden Temperaturen und insbesondere auch oberhalb der Solltemperatur T_Soll liegt, und es wird ein Abschalten des Heizelements 4 veranlasst. Abhängig davon, ob eine starke oder eine schwache thermische Kopplung zwischen dem Heizelement 4 und dem Temperatursensor 5 vorliegt, folgt die Temperatur T_Sensor des Temperatursensors 5 ab der Zeit t=t3 eher dem einem oder eher dem anderen der beiden gestrichelt dargestellten Temperaturverläufe. Bei einer in der Regel gewünschten schwachen thermischen Kopplung wird der untere Temperaturverlauf angenommen, bei dem der Temperatursensor 5 rasch eine Gleichgewichtstemperatur oberhalb der Ansprechtemperatur T_SS annimmt und dort verharrt. Da eine Inbetriebnahme des Heizelements 4 erst wieder unterhalb der Ansprechtemperatur T_SS möglich ist, kommt es somit zu einer thermischen Selbsthaltung, die eine andauernde Abschaltung des Heizelements 4 zur Folge hat.

Die Temperatur T_Gerät der Aufheizvorrichtung weist zur Zeit t=t3 den Wert T_GS auf und steigt ab dieser Zeit mit immer geringerer Rate an und nimmt schließlich wieder ab. Der Temperaturüberschwinger nach dem Abschalten des Heizelements zur Zeit t=t3 wird durch die thermische Trägheit des Systems erzeugt. Würde es zur Zeit t=t3 nicht zu einer Abschaltung des Heizelements 4 kommen, so würde die Temperatur T_Gerät der Aufheizvorrichtung kontinuierlich weiter ansteigen und zur Zeit t=t_Smax würde die maximal zulässige Temperatur T_GSmax der Aufheizvorrichtung überschritten, so dass danach die Gefahr einer Beschädigung der Aufheizvorrichtung bestünde. Um eine Beschädigung verhindern zu können, muss spätestens zur Zeit t=t_Smax eine Abschaltung des Heizelements 4 veranlasst werden, d. h. seit dem Schließen des Netzschalters 12 zur Zeit t=t2 verbleit für eine rechtzeitige Abschaltung maximal die Zeitspanne Δt_S, die der Differenz aus den Zeiten t_Smax und t2 entspricht. Aufgrund der nach der Zeit t=t3 bei der Temperatur T_Gerät der Aufheizvorrichtung auftretenden Temperaturüberhöhung ist sogar noch eine schnellere Abschaltung des Heizelements 4 zur sicheren Verhinderung von Beschädigungen erforderlich. Dies lässt sich umso leichter einhalten, je steiler der Anstieg der Temperatur T_Sensor des Temperatursensors 5 verglichen mit dem Anstieg der Temperatur T_Gerät der Aufheizvorrichtung verläuft.

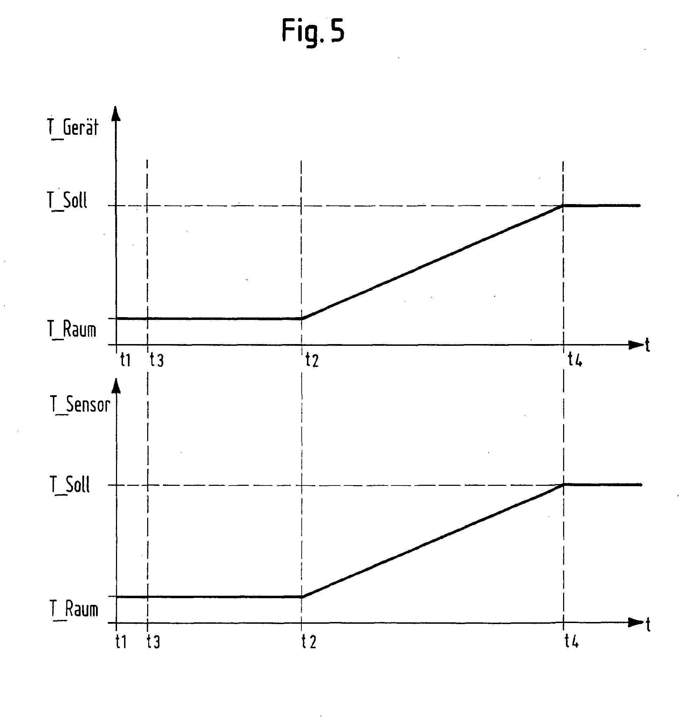

Figur 5 zeigt je ein weiteres Diagramm für den Verlauf der Temperatur T_Gerät. der Aufheizvorrichtung und der Temperatur T_Sensor des Temperatursensors 5. Diese Diagramme beziehen sich auf ein Ausführungsbeispiel, bei dem das Sensorheizelement 6 direkt, d. h. ohne Zwischenschaltung des Netzschalters 12, angeschlossen ist. Eine entsprechende Schaltungsvariante ist beispielsweise in Figur 13 dargestellt. Weiterhin beziehen sich die Diagramme auf eine Situation, bei der die Aufheizvorrichtung eine ausreichende Menge des aufzuheizenden Mediums 2 aufweist, so dass ein Normalbetrieb vorliegt.

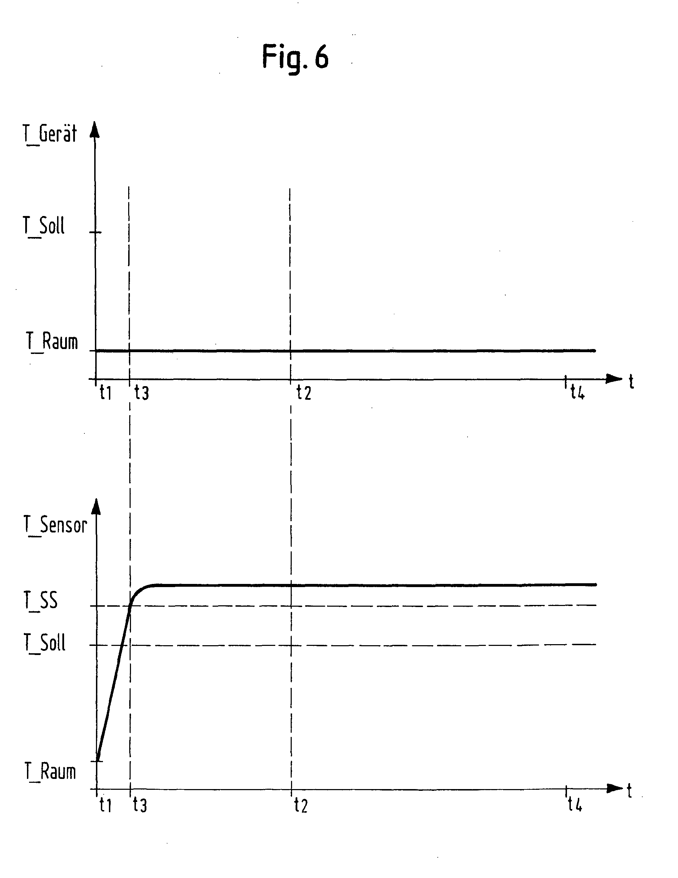

Die Temperaturverläufe entsprechen jeweils den in Figur 3 dargestellten Temperaturverläufen, wobei lediglich für die Zeit t2, zu der der Netzschalter 12 geschlossen wird, ein anderer Wert gewählt wurde, um einige Effekte in der korrespondierenden Figur 6 besser darstellen zu können. Insbesondere kommt es auch nicht zu einer nennenswerten Abweichung der Verläufe der T emperatur T_Sensor des Temperatursensors 5 zwischen den Zeiten t=t1 und t=t2, obwohl gemäß Figur 5 das Sensorheizelement 6 bereits zur Zeit t=t1 mit Strom versorgt wird. Das rührt daher, dass die Temperatur des Mediums 2 bis zum Schließen des Netzschalters 12 zum Zeitpunkt t=t2 ungefähr konstant bleibt, da bis dahin das Heizelement 4 außer Betrieb ist. Die Heizleistung des Sensorheizelements 6 ist so gering, dass es nicht zu einer nennenswerten Aufheizung des Mediums 2 kommt.

Schließlich ist in Figur 6 noch der Betrieb des gleichen Ausführungsbeispiels wie in Figur 5 dargestellt, diesmal jedoch ohne das Medium 2. Die Art der Darstellung wurde wiederum beibehalten. Wie dem oberen Diagramm zu entnehmen ist, verharrt die Temperatur T_Gerät der Aufheizvorrichtung während des gesamten dargestellten Zeitraums auf der Raumtemperatur T_Raum. Dies hat folgende Ursache: Zur Zeit t=t1 wird die Aufheizvorrichtung an die Stromversorgung angeschlossen, so dass ab dieser Zeit das Sensorheizelement 6 mit Strom versorgt wird und den Temperatursensor 5 wegen der fehlenden Kühlwirkung des Mediums 2 sehr schnell aufheizt. Dies ist im unteren Diagramm dargestellt. Eine Aktivierung des Heizelements 4 unterbleibt allerdings, da der Netzschalter 12 noch geöffnet ist. Zur Zeit t=t3 ist die Ansprechtemperatur T_SS des Temperatursensors 5 erreicht und es wird ein Öffnen des Übertemperaturschalters 13 veranlasst. Zur Zeit t=t2 wird der Netzschalter 12 zwar geschlossen; wegen des geöffneten Übertemperaturschalters 13 ist die Stromzufuhr zum Heizelement 4 jedoch nach wie vor unterbrochen. Da bei dieser Variante das Heizelement 4 nicht einmal kurzzeitig in Betrieb genommen wird, ist ein sehr zuverlässiger Schutz der Aufheizvorrichtung vor Übertemperaturschäden gewährleistet.

Prinzipiell ist es auch möglich, jeweils auf den beschriebenen thermischen Selbsthalteeffekt zu verzichten, d. h. mit Abschalten des Heizelements 4 wird auch das Sensorheizelement 6 abgeschaltet. Dies kann bei einem Anschluss des Sensorheizelements 6 über den Netzschalter 12 beispielsweise dadurch erfolgen, das die Abschaltung durch Öffnen des Netzschalters 12 erfolgt.

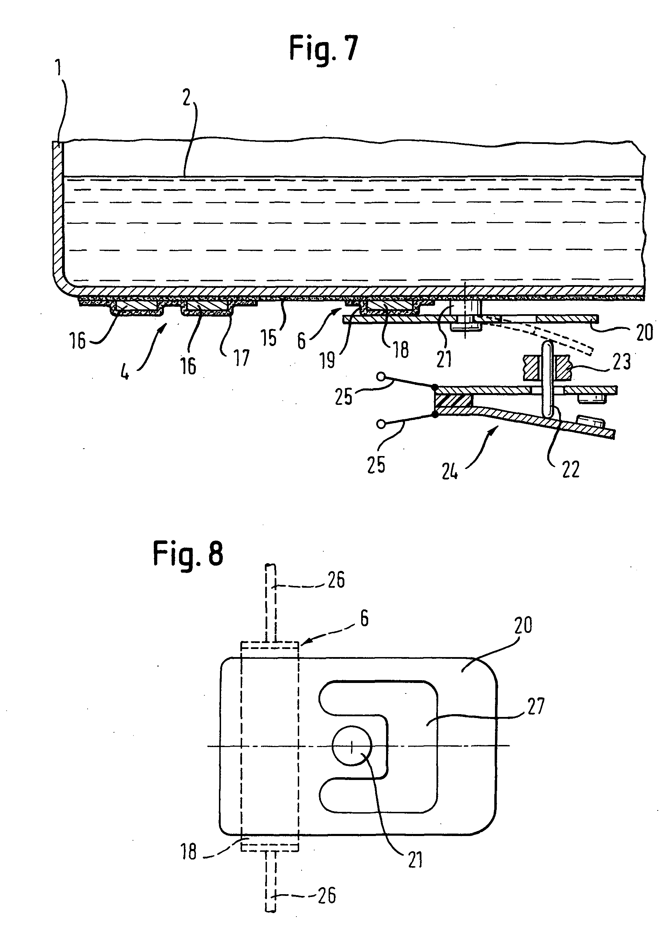

Figur 7 zeigt ein Ausführungsbeispiel eines Wasserkochers, bei dem das Heizelement 4 in Dickschichttechnik ausgeführt ist, in einer Schnittdarstellung. Von dem Wasserkocher ist ein Ausschnitt dargestellt, in dem die erfindungsgemäße Sicherheitseinrichtung angeordnet ist. Das Heizelement 4 ist am Boden des Behälters 1 angeordnet. Hierzu ist der Boden des Behälters 1 auf seiner Außenseite mit einer elektrisch isolierenden Schicht 15 versehen. Auf der elektrisch isolierenden Schicht 15 sind zwei Widerstandsbahnen 16 angeordnet, die durch eine mechanische Schutzschicht 17 abgedeckt sind. Weiterhin ist am Boden des Behälters 1 das Sensorheizelement 6 in Form einer Widerstandsbahn 18 ausgebildet, die ebenfalls auf der elektrisch isolierenden Schicht 15 angeordnet ist und von einer mechanischen Schutzschicht 19 abgedeckt wird. Die Widerstandsbahn 18 ist wesentlich hochohmiger als die Widerstandsbahnen 16, so dass vom Heizelement 4 bei gleicher Versorgungsspannung eine wesentlich größere elektrische Leistung aufgenommen wird als vom Sensorheizelement 6. An der mechanischen Schutzschicht 19 liegt ein bistabiles Bimetallelement 20 an, das mittels eines Haltebolzens 21 fixiert ist und abhängig von seiner Temperatur entweder die durchgezogen oder die gestrichelt dargestellte Position einnimmt. Das Bimetallelement 20 betätigt einen Stößel 22, der in einer Geradführung 23 linear beweglich gelagert ist und auf einen Kontaktfedersatz 24 einwirkt. Abhängig von der Stellung des Stößels 22 bildet der Kontaktfedersatz 24 entweder einen geöffneten oder einen geschlossenen elektrischen Kontakt aus. Am Kontaktfedersatz 24 sind elektrische Anschlussleitungen 25 vorgesehen, über die die Stromzufuhr zum Heizelement 4 erfolgt. Wenn das Bimetallelement 20 durch das Sensorheizelement 6 über die Ansprechtemperatur aufgeheizt wird, nimmt es seine gestrichelt dargestellte Lage ein und verschiebt dabei den Stößel 22 derart, dass beim Kontaktfedersatz 24 der elektrische Kontakt unterbrochen wird und damit die Stromzufuhr zum Heizelement 4 eingestellt wird.

Figur 8 zeigt das Bimetallelement 20 aus Figur 7 und das darunter liegende Sensorheizelement 6 in Aufsicht. Seitlich am Sensorheizelement 6 sind niederohmige Anschlussleitungen 26 vorgesehen, über die die Stromzufuhr zum Sensorheizelement 6 erfolgt. Im Anschlussbereich ist die Widerstandsbahn 18 ebenfalls niederohmig ausgeführt. Das Bimetallelement 20 ist als ein rechteckiger Streifen ausgeführt, aus dem ein U-förmig ausgebildeter Bereich 27 ausgestanzt ist, um die Beweglichkeit zu erhöhen.

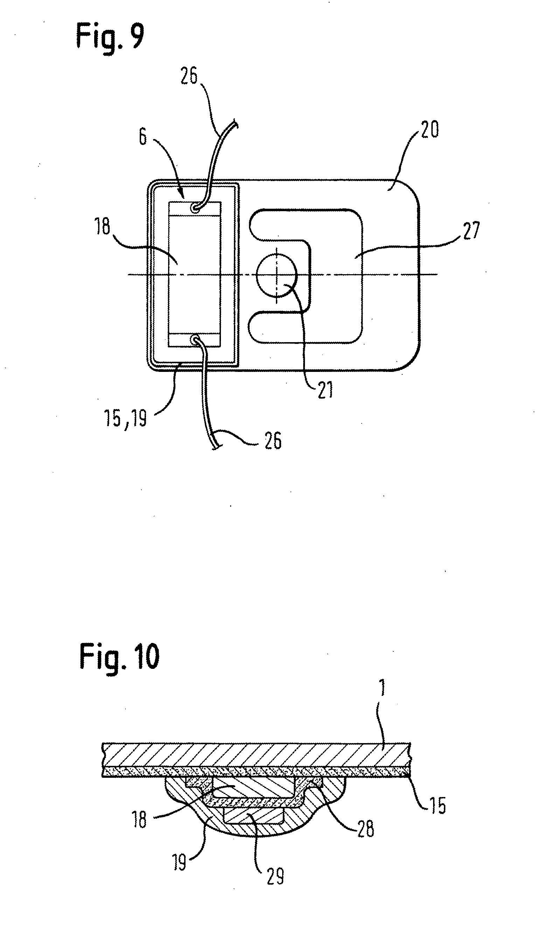

Figur 9 zeigt ein weiteres Ausführungsbeispiel für das Bimetallelement 20 und das Sensorheizelement 6 in Aufsicht. Im Hinblick auf die Formgebung des Bimetallelements 20 besteht kein Unterschied zu Figur 8. Allerdings ist beim Ausführungsbeispiel der Figur 9 das Sensorheizelement 6 auf dem Bimetallelement 20 angeordnet, d. h. auf das Bimetallelement 20 ist die elektrisch isolierende Schicht 15 aufgebracht, die die Widerstandsbahn 18 trägt. Die Widerstandsbahn 18 ist wiederum durch die mechanische Schutzschicht 19 abgedeckt. Prinzipiell besteht auch die Möglichkeit, auf das Aufbringen der Widerstandsbahn 18 auf das Bimetallelement 20 zu verzichten und stattdessen das Bimetallelement 20 aus einem Widerstandsmaterial zu fertigen, so dass das Bimetallelement 20 zusätzlich die Funktion des Sensorheizelements 6 übernimmt.

Die erfindungsgemäße Sicherheitseinrichtung kann auch ohne thermomechanische Elemente realisiert werden, d. h. das in den Figuren 7, 8 und 9 dargestellte Bimetallelement 20 kann entfallen. Ein derartiges Ausführungsbeispiel ist in Figur 10 dargestellt.

Figur 10 zeigt ein Ausführungsbeispiel der erfindungsgemäßen Sicherheitseinrichtung, das keine thermomechanischen Elemente aufweist, in Schnittdarstellung. Bei diesem Ausführungsbeispiel ist die Außenseite des Bodens d es B ehälters 1 w iederum m it d er elektrisch isolierenden Schicht 15 beschichtet. Auf der elektrisch isolierenden Schicht 15 ist die Widerstandsbahn 18 angeordnet, die durch eine elektrisch isolierende Zwischenschicht 28 abgedeckt ist. Es folgt eine Widerstandsbahn 29 mit einem temperaturabhängigen elektrischen Widerstand, wobei sich prinzipiell sowohl ein negativer als auch ein positiver Temperaturkoeffizient eignet. Als letzte Schicht ist die mechanische Schutzschicht 19 aufgebracht. Die Widerstandsbahn 29 kann direkt in einen elektronischen Steuer- oder Regelkreis eingefügt werden, d. h. es ist hierfür kein Wandler erforderlich. Bei diesem Ausführungsbeispiel wird eine Übertemperatur an Hand des aktuellen Widerstandswerts der Widerstandsbahn 29 erkannt.

Zur Ausbildung sämtlicher vorgenannter Schichtstrukturen können die einzelnen Schichten mittels Siebdruck in pastöser Konsistenz aufgetragen werden. Nach jedem Auftrag erfolgt ein Einbrennen. Dabei können entsprechende Schichten des Heizelements 4 und des Sensorheizelements 6 in einem Arbeitsgang aufgebracht werden.

Die erfindungsgemäße Sicherheitseinrichtung eignet sich nicht nur für den Einsatz bei Aufheizgeräten, die in Dickschichttechnik ausgebildet sind, sondern auch für Aufheizgeräte in konventioneller Technik. Ein derartiges Ausführungsbeispiel ist in Figur 11 dargestellt.

Figur 11 zeigt ein Ausführungsbeispiel eines Wasserkochers, bei dem das Heizelement 4 und das Sensorheizelement 6 in konventioneller Technik ausgeführt sind, in Schnittdarstellung. Bei diesem Ausführungsbeispiel ist das Heizelement 4 als Rohrheizkörper ausgebildet und auf der Heizplatte 3 angeordnet. Die Heizplatte 3 besteht aus einem Material hoher thermischer Leitfähigkeit und ist beispielsweise durch Löten oder Reibschweißen am Behälter 1 befestigt. Das Heizelement 4 ist kann zum Beispiel durch Löten oder Verstemmen an der Heizplatte 3 befestigt sein. Die Heizplatte 3 weist eine Aussparung 30 auf, in der die erfindungsgemäße Sicherheitseinrichtung angeordnet ist. Hierzu ist innerhalb der Aussparung 30 am Boden des Behälters 1 eine Halterung 31 aus einem Material hoher thermischer Leitfähigkeit mit einem ersten Schenkel 32 befestigt. Auf dem ersten Schenkel 32 der Halterung 31 ist das Bimetallelement 20 angeordnet, das entsprechend dem Ausführungsbeispiel aus Figur 7 über den Stößel 22 auf den nicht dargestellten Kontaktfedersatz 24 einwirkt. Die Halterung 31 weist zudem einen zweiten Schenkel 33 auf, der das Sensorheizelement 6 trägt. Hierzu ist der zweite Schenkel 33 der Halterung 31 von einem Isolierkörper 34 aus einem elektrisch isolierenden Material ummantelt, auf den ein Widerstandsdraht 35 aufgewickelt ist. Der Widerstandsdraht 35 weist zwei Anschlussleitungen 36 auf und wird von einer Deckschicht 37 abgedeckt, die auch entfallen kann.

In seiner Funktionsweise entspricht das Ausführungsbeispiel aus Figur 11 dem Ausführungsbeispiel gemäß Figur 7, wobei die zusätzlich vorhandene Heizplatte 3 die Aufgabe hat, die vom Heizelement 4 erzeugte Wärme möglichst gleichmäßig über den Boden des Behälters 1 zu verteilen. Dabei dient die Aussparung 30 in der Heizplatte 3 dazu, das Sensorheizelement 6 vom Heizelement 4 thermisch zu entkoppeln.

Im Rahmen der Erfindung besteht eine Vielzahl von Variationsmöglichkeiten sowohl im Hinblick auf die Ausbildung der Einzelkomponenten als auch im Hinblick auf deren Verschaltung, so dass das in Figur 2 dargestellte Blockschaltbild entsprechend den Anforderungen des jeweiligen Einzelfalls abgewandelt werden kann. Insbesondere können die im folgenden beschriebenen Schaltungsvarianten zum Einsatz kommen.

Figur 12 zeigt eine Schaltungsvariante, bei der der Netzschalter 12 vor dem Sensorheizelement 6 angeordnet ist, d. h. die Stromzufuhr zum Sensorheizelement 6 kann mit Hilfe des Netzschalters 12 unterbrochen werden. Der Netzschalter 12 ist zwischen den Anschlussklemmen 11 und einem Funktionsblock 38 angeordnet, der das Sensorheizelement 6, den Temperatursensor 5 und den Übertemperaturschalter 13 beinhaltet. Bei dem dargestellten Ausführungsbeispiel sind der Temperatursensor 5 und der Übertemperaturschalter 13 zu einen temperaturempfindlichen Schalter zusammengefasst, der beispielsweise in Form der in Figur 7 dargestellten Kombination aus dem Bimetallelement 20, den Stößel 22 und dem Kontaktfedersatz 24 ausgebildet sein kann. In Reihe zum Übertemperaturschalter 13 ist das Heizelement 4 geschaltet, so dass bei geöffnetem Übertemperaturschalter 13 die Stromzufuhr zum Heizelement 4 unterbrochen ist. Die Schaltung kann auch entsprechend der gestrichelt dargestellten Leitungsführung abgewandelt sein.

Bei der dargestellten Schaltung wird das Sensorheizelement 6 erst mit Schließen des Netzschalters 12 in Betrieb genommen. Wird dem dadurch ausgelösten Aufheizvorgang nicht durch eine ausreichende Kühlung entgegengewirkt, so wird ein Temperaturwert erreicht, bei dem sich der Übertemperaturschalter 13 öffnet und dadurch die Stromzufuhr zum Heizelement 4 unterbricht. Die Stromzufuhr zum Sensorheizelement 6 wird dabei nicht beeinflusst, so dass der Übertemperaturschalter 13 geöffnet bleibt, bis sich eine ausreichende Kühlwirkung einstellt oder bis der Netzschalter 12 geöffnet wird und dadurch die Stromzufuhr zum Sensorheizelement 6 unterbrochen wird.

Figur 13 zeigt eine Schaltungsvariante, bei der der Netzschalter 12 hinter dem Sensorheizelement 6 angeordnet ist, d. h. die Stromzufuhr zum Sensorheizelement 6 wird durch den Netzschalter 12 nicht beeinflusst. Diese Schaltungsvariante unterscheidet sich von der in Figur 12 dargestellten lediglich darin, dass der Netzschalter 12 zwischen dem Funktionsblock 38 und dem Heizelement 4 angeordnet ist. Auch diese Schaltungsvariante kann entsprechend der gestrichelt dargestellten Leitungsführung abgewandelt sein.

In der Funktionsweise besteht insofern ein Unterschied zu Figur 12, als das Sensorheizelement 6 unabhängig von der Stellung des Netzschalters 12 permanent an der Stromversorgung angeschlossen ist. Dies hat zur Folge, dass bei einer mangelnden Kühlwirkung das Heizelement 4 beim Schließen des Netzschalters 12 nicht in Betrieb genommen wird. Bei einer Anwendung in einem Wasserkocher bedeutet das beispielsweise, dass der Wasserkocher nur dann in Betrieb genommen werden kann, wenn er wenigstens zum Teil mit Wasser gefüllt ist. Die gestrichelt dargestellte Abwandlung entspricht in ihrer Funktionsweise dagegen der in Figur 12 dargestellten Schaltungsvariante.

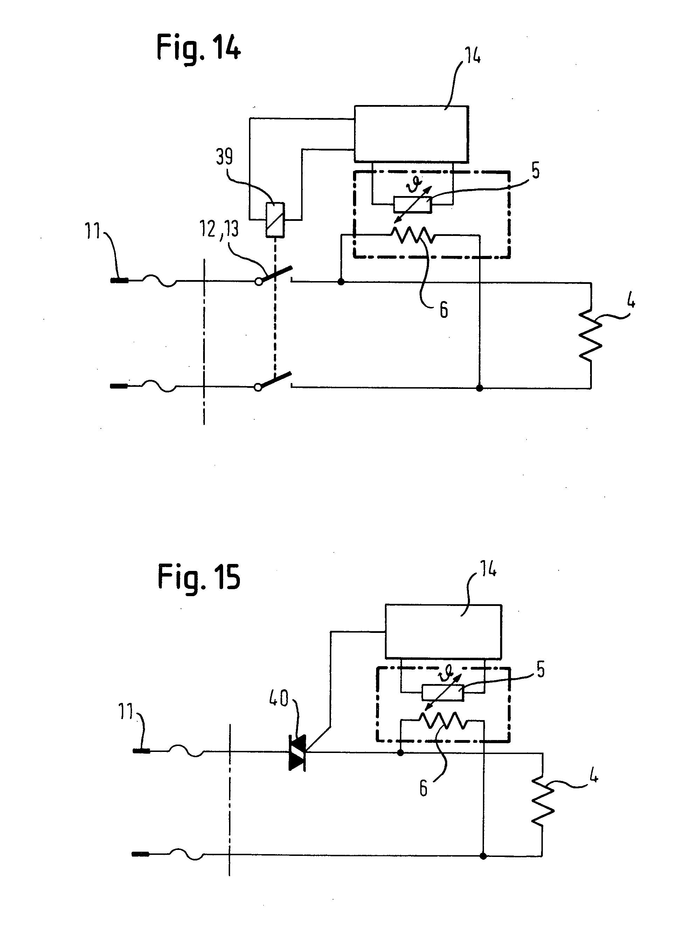

Anstelle der in den Figuren 12 und 13 dargestellten elektromechanischen Schalter können auch andere Bauteile eingesetzt werden, die über eine temperaturabhängige Eigenschaft verfügen und letztendlich ein Ein- und Ausschalten eines Stroms bewirken können. Insbesondere können temperaturempfindliche elektrische oder elektronische Bauteile eingesetzt werden wie temperaturabhängige Widerstände sowie passive und aktive Halbleiterbauelemente wie Dioden und Transistoren. Die aus einer Temperaturänderung resultierende Änderung des Stromes durch das Bauelement oder der am Bauelement abfallenden Spannung wird dann in einer elektronischen Schaltung ausgewertet und in ein Steuersignal für ein Relais oder für einen Leistungshalbleiterschalter umgewandelt. Das Relais oder der Leistungshalbleiterschalter übernehmen dann die Funktion des Netzschalters 12 und/oder des Übertemperaturschalters 13. Derartige Schaltungsvarianten sind in den Figuren 14 und 15 dargestellt.

Figur 14 zeigt eine Schaltungsvariante mit einer Steuer- oder Regelelektronik. Bei dieser Variante ist der Netzschalter 12 unmittelbar mit den Anschlussklemmen 11 verbunden, so dass mit dem Netzschalter 12 die Stromzufuhr zum Sensorheizelement 6 und dem dazu parallel geschalteten Heizelement 4 unterbrochen werden kann. In thermischen Kontakt mit dem Sensorheizelement 6 ist der Temperatursensor 5 angeordnet, der mit dem Steuergerät 14 verbunden ist. Das Steuergerät 14 ist wiederum mit der Spule 39 eines Relais verbunden, dessen Schaltkontakte den Netzschalter 12 und gleichzeitig den Übertemperaturschalter 13 bilden.

Wenn bei dieser Schaltungsvariante vom Steuergerät 14 mit Hilfe des Temperatursensors 5 ein unzulässiger Temperaturzustand ermittelt wird, veranlasst das Steuergerät 14, dass der Netzschalter 12 geöffnet wird und damit die Stromzufuhr sowohl zum Sensorheizelement 6 als auch zum Heizelement 4 unterbrochen wird.

Figur 15 zeigt eine vollelektronische Schaltungsvariante. Diese Schaltungsvariante unterscheidet sich von Figur 14 darin, dass der Netzschalter 12 bzw. der Übertemperaturschalter 13 mittels eines Triacs 40 realisiert ist. Ansonsten sind die Schaltungsvarianten gemäß den Figuren 14 und 15 sowohl im Hinblick auf ihren Aufbau als auch im Hinblick auf ihre Funktionsweise identisch.

### Bezugszeichenliste

- 1: Behälter
- 2: Medium
- 3: Heizplatte
- 4: Heizelement
- 5: Temperatursensor
- 6: Sensorheizelement
- 7: thermische Barriere
- 8: weiterer Temperatursensor
- 9: weiteres Sensorheizelement
- 10: weitere thermische Barriere
- 11: Anschlussklemme
- 12: Netzschalter
- 13: Übertemperaturschalter
- 14: Steuergerät
- 15: elektrisch isolierende Schicht
- 16: Widerstandsbahn (Heizelement 4)
- 17: mechanische Schutzschicht (Heizelement4)
- 18: Widerstandsbahn (Sensorheizelement 6)
- 19: mechanische Schutzschicht (Sensorheizelement 6)
- 20: Bimetallelement
- 21: Haltebolzen
- 22: Stößel
- 23: Geradführung
- 24: Kontaktfedersatz
- 25: Anschlussleitung (Kontaktfedersatz 24)
- 26: Anschlussleitung (Widerstandsbahn 18)
- 27: ausgestanzter Bereich
- 28: elektrisch isolierende Zwischenschicht
- 29: Widerstandsbahn mit temperaturabhängigem Widerstand
- 30: Aussparung
- 31: Halterung
- 32: erster Schenkel (Halterung 31)
- 33: zweiter Schenkel (Halterung 31)
- 34: Isolierkörper
- 35: Widerstandsdraht
- 36: Anschlussleitung (Widerstandsdraht 35)
- 37: Deckschicht
- 38: Funktionsblock
- 39: Spule
- 40: Triac

## Patentansprüche

1. Sicherheitseinrichtung zum Schutz einer Vorrichtung, die ein Heizelement (4) zum Aufheizen eines Mediums (2) aufweist, vor unzulässigen Temperaturzuständen, mit einem Sensorelement (5, 8) zur Temperaturerfassung, das so in der Vorrichtung angeordnet ist, dass es beim ordnungsgemäßen Betrieb der Vorrichtung mit dem Medium (2) thermisch gekoppelt ist, **dadurch gekennzeichnet, dass** ein Sensorheizelement (6, 9) vorgesehen ist zum Aufheizen des Sensorelements (5, 8) auf Temperaturen, die bei einer Unterbrechung der thermischen Kopplung zwischen dem Sensorelement (5, 8) und dem Medium (2) oberhalb einer Temperatur liegen, die das Medium (2) beim ordnungsgemäßen Betrieb der Vorrichtung maximal annimmt.

2. Sicherheitseinrichtung nach Anspruch 1, **dadurch gekennzeichnet, dass** das Sensorelement (5, 8) und das Sensorheizelement (6, 9) eine konstruktive Einheit bilden.

3. Sicherheitseinrichtung nach einem der vorhergehenden Ansprüche, **dadurch gekennzeichnet, dass** das Heizelement (4) und/oder das Sensorheizelement (6, 9) und/oder das Sensorelement (5, 8) in Dickschichttechnik gefertigt sind.

4. Sicherheitseinrichtung nach Anspruch 3, **dadurch gekennzeichnet, dass** das Heizelement (4), das Sensorheizelement (6, 9) und das Sensorelement (5, 8) als gemeinsame Dickschichtbaugruppe ausgebildet sind.

5. Sicherheitseinrichtung nach einem der Ansprüche 1 bis 3, **dadurch gekennzeichnet, dass** das Sensorelement (5, 8) als Bimetallelement (20) ausgebildet ist.

6. Sicherheitseinrichtung nach Anspruch 5, **dadurch gekennzeichnet, dass** das Bimetallelement (20) zur Übernahme der Funktion des Sensorheizelements (6, 9) durchgehend aus einem Widerstandsmaterial besteht.

7. Sicherheitseinrichtung nach Anspruch 5, **dadurch gekennzeichnet, dass** das Bimetallelement (20) zur Übernahme der Funktion des Sensorheizelements (6, 9) eine auf einer Isolierschicht (15) angeordnete Widerstandsschicht (18) aufweist.

8. Sicherheitseinrichtung nach einem der vorhergehenden Ansprüche, **dadurch gekennzeichnet, dass** mehrere Sensorelemente (5, 8) und mehrere Sensorheizelemente (6, 9) vorgesehen sind.

9. Sicherheitseinrichtung nach einem der vorhergehenden Ansprüche, **dadurch gekennzeichnet, dass** das Sensorheizelement (6, 9) so an eine externe Stromversorgung angeschlossen ist, dass die Sicherheitseinrichtung auch bei ausgeschaltetem Heizelement (4) betriebsbereit ist.

10. Vorrichtung zum Aufheizen eines Mediums (2) mittels eines Heizelements (4), **dadurch gekennzeichnet, dass** eine Sicherheitseinrichtung nach einem der vorhergehenden Ansprüche vorgesehen ist.

11. Vorrichtung nach Anspruch 10, **dadurch gekennzeichnet, dass** konstruktive Maßnahmen vorgesehen sind zur Reduzierung der thermischen Kopplung zwischen dem Sensorelement (5, 8) und dem Heizelement (4), die nicht über das Medium (2) erfolgt.

12. Verfahren zum Schutz einer Vorrichtung, die ein Heizelement (4) zum Aufheizen eines Mediums (2) aufweist, vor unzulässigen Temperaturzuständen, wobei von einem Sensorelement (5, 8) eine Temperatur erfasst wird und abhängig von der erfassten Temperatur ermittelt wird, ob ein unzulässiger Temperaturzustand der Vorrichtung vorliegt, **dadurch gekennzeichnet, dass** das Sensorelement (5, 8) mit Hilfe eines Sensorheizelements (6, 9) beheizt wird und das Sensorelement (5, 8) beim ordnungsgemäßen Betrieb der Vorrichtung mit Hilfe des Mediums (2) gekühlt wird.

13. Verfahren nach Anspruch 12, **dadurch gekennzeichnet, dass** bei einem unzulässigem Temperaturzustand veranlasst wird, dass das Heizelement (4) ausgeschaltet wird.
